**Europäisches Patentamt**

**European Patent Office**

**Office européen des brevets**

(19)

(11) Numéro de publication : **0 307 327 B1**

(12) # FASCICULE DE BREVET EUROPEEN

(45) Date de publication du fascicule du brevet :
**11.09.91 Bulletin 91/37**

(21) Numéro de dépôt : **88420296.1**

(22) Date de dépôt : **01.09.88**

(51) Int. Cl.⁵ : **F16B 21/16, // F16G11/12**

(54) Dispositif de liaison à vis entre deux pièces avec possibilité de réglage de l'écartement entre celles-ci.

(30) Priorité : **04.09.87 FR 8712712**

(43) Date de publication de la demande :
**15.03.89 Bulletin 89/11**

(45) Mention de la délivrance du brevet :
**11.09.91 Bulletin 91/37**

(84) Etats contractants désignés :
**AT BE CH DE ES GB GR IT LI LU NL SE**

(56) Documents cités :
**FR-A- 1 231 735**
**FR-A- 2 390 618**
**FR-A- 2 529 272**
**GB-A- 797 041**
**GB-A- 957 177**
**US-A- 4 442 993**

(73) Titulaire : **WICHARD (SOCIETE ANONYME DE DROIT FRANCAIS)**
**Z.I. de Felet**
**F-63300 Thiers (FR)**

(72) Inventeur : **Boissonnet, Michel**
**Chemin des Champs**
**F-63300 Thiers (FR)**
Inventeur : **Issard, Gérard**
**Côte de Pinon**
**F-63300 Thiers (FR)**

(74) Mandataire : **Maureau, Philippe et al**
**Cabinet Germain & Maureau Le Britannia -**
**Tour C 20, bld Eugène Déruelle Boîte Postale 3011**
**F-69392 Lyon Cédex 03 (FR)**

Jouve, 18, rue Saint-Denis, 75001 PARIS

## Description

La présente invention a pour objet un dispositif de liaison à vis entre deux pièces avec possibilité de réglage de l'écartement entre celles-ci.

Un tel dispositif peut être notamment utilisé pour relier un câble à un point d'attache avec possibilité de réglage de la tension de ce câble vis-à-vis du point d'attache.

Un dispositif connu est constitué par un ridoir dans lequel chacune des deux pièces à réunir est équipée d'une tige filetée, ces tiges filetées étant coaxiales de pas inverse, et réunies par une douille comportant deux taraudages inverses dans lesquels sont engagées les tiges filetées.

La rotation de la douille dans un sens ou dans l'autre rapproche ou éloigne les deux pièces qui peuvent être maintenues dans la position souhaitée par deux contre-écrous. Il s'agit d'un système lourd convenant pour des montages ne nécessitant pas des réglages fréquents.

Il existe également des ridoirs de type monotendeur, c'est-à-dire ne comportant qu'un seul organe de réglage à vis. Cependant, ces dispositifs sont d'une structure complexe, notamment en ce qui concerne la liaison entre la tige, l'écrou et le corps.

Le document FR-A-1231735 concerne un raccord de tringlerie entre une tige filetée et une pièce cylindrique. Ce raccord comprend un élément tubulaire présentant un passage axial dont une partie filetée sert à l'engagement de la tige filetée et une partie servant à l'engagement de la pièce cylindrique. Cette dernière comporte une gorge périphérique, dans laquelle sont engagées les branches d'une agrafe traversant des ouvertures ménagées dans une rainure périphérique de l'élément tubulaire.

Le document FR-A-2529272 concerne un dispositif de maintien d'un outil dans un porte-outil avec possibilité de rotation de l'outil et de retrait axial de celui-ci ; ce maintien est assuré par l'intermédiaire d'une bague engagée dans des gorges ménagées respectivement dans la face extérieure de la queue de l'outil et dans la face intérieure du porte-outil.

Le but de l'invention est de fournir un dispositif de liaison à vis entre deux pièces dans lequel l'organe de réglage que comporte l'une des deux pièces est monté de façon simple et rapide, tout en évitant tout risque de désolidarisation axiale.

A cet effet, le dispositif qu'elle concerne, comprend :

— une première pièce équipée d'une tige filetée **5**,

— une seconde pièce **6** comportant une partie de raccordement cylindrique, présentant depuis son extrémité libre successivement, une zone chanfreinée **7**, une zone cylindrique **8**, une gorge **9** puis une portée cylindrique **10**, cette pièce présentant un alésage central pour l'engagement de la tige filetée de la première pièce,

— un jonc **17** réalisé en un matériau incompressible, dont le profil extérieur correspond à celui du fond de la gorge **9** de la seconde pièce et dont la section est égale au double de la section de la gorge **9**, et qui est réalisé à partir d'une pluralité de tronçons **17a**, **17b** et **17c** destinés, en conditions d'utilisation, à être disposés bout à bout pour former un anneau dont le diamètre est égal au diamètre de l'ouverture cylindrique de la bague, la plus grande dimension de chaque tronçon étant inférieure audit diamètre.

— une bague **12** comportant, sur sa face interne, successivement, une ouverture **13** taraudée au diamètre de la tige filetée **5** de la première pièce, une zone lisse **14** au diamètre de la partie cylindrique de la seconde pièce, une gorge **15** dont la profondeur varie axialement entre une valeur égale à la dimension du jonc **17** et à la moitié de la dimension du jonc considéré dans le sens radial, et une zone **16** au diamètre de la partie cylindrique de la seconde pièce, et

— des moyens **18**, **19** pour assurer le blocage axial de la bague par rapport à la seconde pièce dans une position dans laquelle le jonc est engagé à la fois dans la gorge de la seconde pièce et dans la partie de plus faible section de la gorge ménagée dans la bague.

Pour réaliser le montage du dispositif, il est procédé tout d'abord à l'engagement du jonc dans la partie de la gorge de la bague de plus grande profondeur, puis au montage de la seconde pièce dont l'extrémité est introduite dans la bague, jusqu'à ce que la gorge de cette seconde pièce soit située en regard du jonc, et enfin au retrait de la seconde pièce jusqu'à ce que sa gorge dans laquelle est engagé le jonc se trouve en regard de la zone de moindre profondeur de la gorge de la bague. Il est alors procédé au blocage axial de la seconde pièce par rapport à la bague. Le réglage de l'écartement entre les deux pièces est réalisé par rotation de la bague sur la tige filetée de la première pièce.

Selon une caractéristique de l'invention, le jonc est réalisé à partir d'une pluralité de tronçons destinés, en conditions d'utilisation, à être disposés bout à bout pour former un anneau dont le diamètre moyen est égal au diamètre de l'ouverture cylindrique de la bague, la plus grande dimension de chaque tronçon étant inférieure audit diamètre.

Il est ainsi possible, pour réaliser la mise en place du jonc, de procéder au montage successif des différents tronçons à l'intérieur de la bague, en les disposant bout à bout dans la gorge de celle-ci, afin de reconstituer un anneau ouvert.

Avantageusement, le jonc est réalisé en fil métallique qui subit tout d'abord une opération d'enroulement pour former un anneau puis est sectionné transversalement pour former plusieurs tronçons d'anneaux. Le nombre de tronçons d'anneaux peut, par exemple, être de trois.

Selon une forme de réalisation de ce dispositif, le jonc est de section circulaire.

Avantageusement dans ce cas, la gorge, ménagée dans la bague, est délimitée dans ses parties profonde et peu profonde par deux surfaces présentant, vu en coupe, un profil en arc de cercle au rayon du jonc, reliées par une surface inclinée tangente aux deux surfaces cylindriques.

Conformément à une autre caractéristique de l'invention, les moyens de blocage axial de la bague sur la seconde pièce sont constitués par un élément monté de façon définitive entre l'extrémité de la bague et un épaulement ménagé sur la seconde pièce.

De toute façon, l'invention sera bien comprise à l'aide de la description qui suit, en référence au dessin schématique annexé représentant, à titre d'exemple non limitatif, une forme d'exécution de ce dispositif :

Figure 1 en est une vue en élévation ;

Figure 2 est une vue en coupe longitudinale de la partie centrale du dispositif en position montée ;

Figure 3 en est une vue en coupe transversale selon la ligne III-III de figure 2 ;

Figure 4 est une vue similaire à figure 2 en période de montage du dispositif ;

Figure 5 est une vue en coupe transversale du dispositif selon la ligne V-V de figure 4.

Le dispositif, représenté au dessin, est destiné à réaliser la liaison entre un point d'attache 2 et un câble 3. L'extrémité du câble 3, constitutive de la première pièce, est équipée de façon connue d'un embout 4 dont l'extrémité 5 est filetée.

La seconde pièce, constitutive de l'assemblage, se présente sous la forme d'un mousqueton 6 monté sur un embout de raccordement présentant, depuis son extrémité libre, une zone 7 chanfreinée, une portée cylindrique 8, une gorge 9 de section hémi-cylindrique et une seconde portée cylindrique 10 de même diamètre que la portée 8.

Le dispositif comprend également une bague 12 dont la partie interne comprend, successivement, une ouverture taraudée 13 au diamètre de la partie filetée 5 de la première pièce, une zone lisse 14 au diamètre de la partie cylindrique de la seconde pièce, une gorge 15 et une zone lisse 16 au diamètre de la partie cylindrique 10 de la seconde pièce.

Le dispositif comprend également un jonc 17 qui, dans la forme d'exécution représentée au dessin, est de section circulaire, sa section étant égale au double de la section de la gorge 9 ménagée dans la seconde pièce.

Quant à la gorge 15, ménagée dans la bague, sa profondeur varie axialement entre une valeur égale au diamètre du jonc 17 à son extrémité située du côté de la première pièce et une valeur égale à la moitié du diamètre du jonc à son extrémité située du côté de la seconde pièce. Les deux extrémités de cette gorge

15, arrondies au rayon du jonc, sont reliées l'une à l'autre par une surface inclinée qui leur est tangente.

La surface extérieure de la bague 12 peut être équipée d'éléments de manoeuvre tels que stries ou similaires, profil à plusieurs pans ou être équipée d'un bras simple ou double, fixe ou articulé ou encore d'un volant.

Enfin, le dispositif selon l'invention est équipé d'un organe de verrouillage axial 18 constitué par un anneau ouvert ou fermé ou une goupille par exemple, destiné à venir s'engager sur la portée cylindrique 10 de la seconde pièce, entre un épaulement 19 que comporte cette seconde pièce et l'extrémité correspondante de la bague 12.

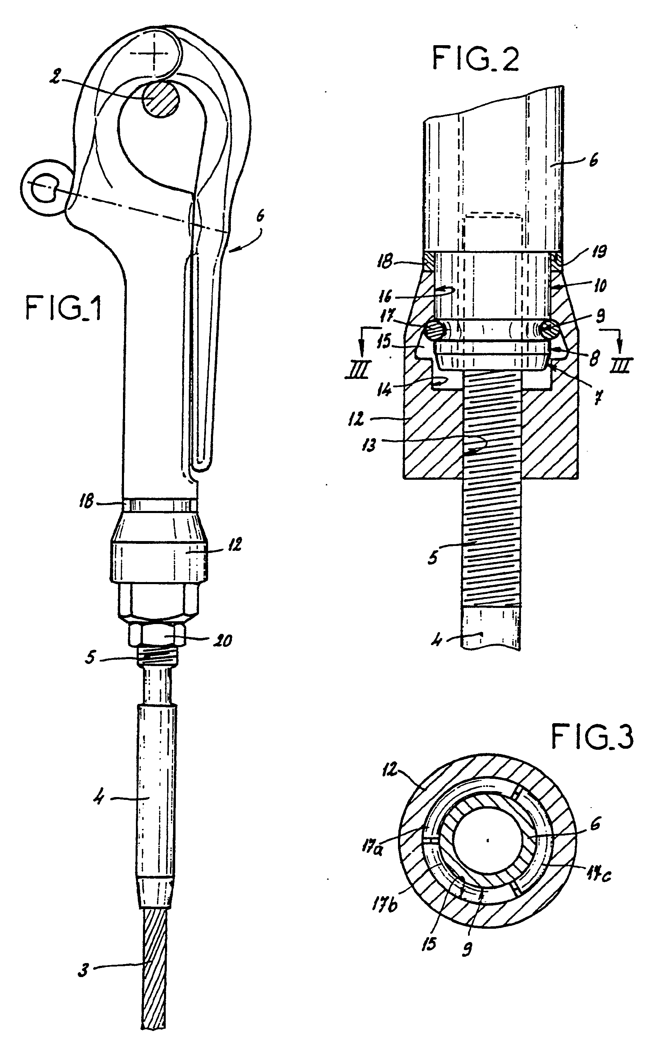

Comme cela ressort notamment des figures 3 et 5, le jonc 17 est réalisé en trois tronçons 17a, 17b, 17c, qui, mis bout à bout, forment un anneau ouvert. Cette conformation du jonc en plusieurs tronçons est avantageuse, d'une part, pour permettre l'introduction du jonc à l'intérieur de la bague et, d'autre part, pour permettre des déformations du jonc entre la position de montage et la position montée du système.

En position montée, le dispositif se trouve dans la position représentée à la figure 2. Le jonc 17 est disposé dans la gorge 9 et dans la partie étroite de la gorge 15 de la bague, assurant une liaison axiale entre la bague 12 et la seconde pièce 6. Dans cette position, la bague 12 ne peut pas coulisser vis-à-vis de la seconde pièce en raison de la présence de l'élément de verrouillage 18.

Pour réaliser une modification de la tension du câble 3, par modification de l'écartement entre les deux pièces constitutives de l'assemblage, il suffit de desserrer le contre-écrou 20 monté sur la partie filetée 5 de l'embout 4, et de faire pivoter la bague 12 sur la tige filetée 5, mouvement assurant un déplacement axial de la partie filetée 5 de l'embout 4 et par suite une modification de l'écartement entre les deux pièces principales.

Lorsque le réglage est effectué, le contre-écrou 20 est resserré.

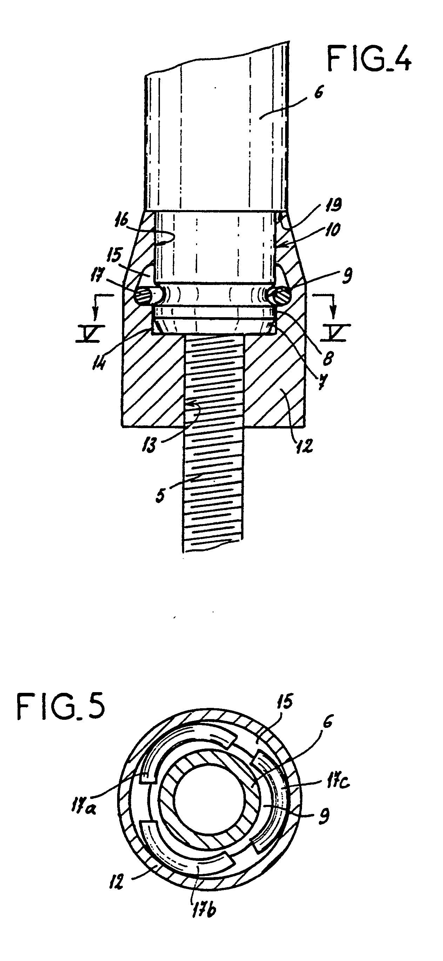

Le montage du dispositif est illustré aux figures 4 et 5. Dans un premier temps, les tronçons de jonc 17 sont engagés dans la bague 12, et plus précisément dans la zone de plus grande profondeur de la gorge 15 de celle-ci. La seconde pièce 6 est alors engagée à fond dans la bague 12, c'est-à-dire jusqu'à ce que sa gorge 9 soit située en regard du jonc 17. La seconde pièce 6 est alors retirée et entraîne avec elle le jonc 17 jusqu'à amener celui-ci dans la zone de moindre profondeur de la gorge 15 de la bague 12, comme montré à la figure 2. Tout mouvement axial de la bague 12 par rapport à la seconde pièce 6 est alors interdit après mise en place d'une bague 18 ou similaire.

Comme il ressort de ce qui précède, l'invention apporte une grande amélioration à la technique existante en fournissant un dispositif de réglage à vis entre deux éléments, de conception simple et d'utilisation pratique.

Comme il va de soi, l'invention ne se limite pas à la seule forme d'exécution de ce dispositif, décrite ci-dessus à titre d'exemple ; elle en embrasse, au contraire, toutes les variantes d'exécution.

C'est ainsi notamment que le jonc pourrait être réalisé à partir d'un nombre différent de tronçons ou posséder une section autre que circulaire, notamment carrée ou rectangulaire, sans que l'on sorte pour autant du cadre de l'invention.

## Revendications

1. Dispositif de liaison à vis entre deux pièces, avec possibilité de réglage de l'écartement entre celle-ci, ce dispositif comprend :
— une première pièce équipée d'une tige filetée (5),
— une seconde pièce (6) comportant une partie de raccordement cylindrique, présentant depuis son extrémité libre successivement, une zone chanfreinée (7), une zone cylindrique (8), une gorge (9) puis une portée cylindrique (10), cette pièce présentant un alésage central pour l'engagement de la tige filetée de la première pièce,
— un jonc (17) réalisé en un matériau incompressible, dont le profil extérieur correspond à celui du fond de la gorge (9) de la seconde pièce et dont la section est égale au double de la section de la gorge (9), et qui est réalisé à partir d'une pluralité de tronçons (17a, 17b, 17c) destinés, en conditions d'utilisation, à être disposés bout à bout pour former un anneau dont le diamètre est égal au diamètre de l'ouverture cylindrique de la bague, la plus grande dimension de chaque tronçon étant inférieure audit diamètre.
— une bague (12) comportant, sur sa face interne, successivement, une ouverture (13) taraudée au diamètre de la tige filetée (5) de la première pièce, une zone lisse (14) au diamètre de la partie cylindrique de la seconde pièce, une gorge (15) dont la profondeur varie axialement entre une valeur égale à la dimension du jonc (17) et à la moitié de la dimension du jonc considéré dans le sens radial, et une zone (16) au diamètre de la partie cylindrique de la seconde pièce, et
— des moyens (18, 19) pour assurer le blocage axial de la bague par rapport à la seconde pièce dans une position dans laquelle le jonc est engagé à la fois dans la gorge de la seconde pièce et dans la partie de plus faible section de la gorge ménagée dans la bague.

2. Dispositif selon la revendication 1, caractérisé en ce que le jonc (17) est réalisé en fil métallique qui subit, tout d'abord, une opération d'enroulement pour former un anneau puis est sectionné transversalement pour former plusieurs tronçons d'anneaux.

3. Dispositif selon l'une quelconque des revendications 1 et 2, caractérisé en ce que le jonc (17) est de section circulaire.

4. Dispositif selon la revendication 3, caractérisé en ce que la gorge (15), ménagée dans la bague (12), est délimitée dans ses parties profonde et peu profonde par deux surfaces présentant, vu en coupe, un profil en arc de cercle au rayon du jonc, reliées par une surface inclinée tangente aux deux surfaces cylindriques.

5. Dispositif selon l'une quelconque des revendications 1 à 4, caractérisé en ce que les moyens de blocage axial de la bague (12) sur la seconde pièce (6) sont constitués par un élément (18) monté de façon définitive entre l'extrémité de la bague et un épaulement (19) ménagé sur la seconde pièce.

## Patentansprüche

1. Schraubverbindungsvorrichtung für zwei Elemente mit der Möglichkeit, den Abstand dazwischen einzustellen, wobei diese Vorrichtung beinhaltet :
— ein erstes, mit einer Gewindestange (5) bestücktes Element,
— ein zweites Element (6), das einen zylindrischen Verbindungsabschnitt aufweist, der ausgehend von seinem freien Ende sukzessive aufweist eine abgefaste Zone (7), eine zylindrische Zone (8), eine Kehle (9), dann eine zylindrische Tragfläche (10), wobei dieses Element eine zentrale Bohrung zur Aufnahme der Gewindestange des ersten Elementes hat,
— ein Haltering (17) hergestellt aus einem inkompressiblen Material, dessen Außenprofil demjenigen des Grundes der Kehle (9) des zweiten Elementes entspricht und dessen Querschnitt gleich dem Doppelten des Querschnittes der Kehle (9) ist und der ausgehend von einer Mehrzahl von Teilstücken (17a, 17b, 17c) gebildet ist, die im Einsatz dazu bestimmt sind, Ende an Ende zueinander angeordnet zu werden, um einen Ring zu bilden, dessen Durchmesser gleich dem Durchmesser der zylindrischen Öffnung eines Ringstückes ist, wobei die größte Dimension eines jeden Teilstückes geringer ist als der genannte Durchmesser,
— ein Ringstück (12), das auf seiner Innenfläche sukzessive aufweist eine dem Durchmesser der Gewindestange (5) des ersten Elementes entsprechende Gewindebohrung (13), eine glatte Zone (14) im Durchmesser des zylindrischen Abschnittes des zweiten Elementes, eine Kehle (15), deren Tiefe in axialer Richtung zwischen einem Wert gleich der Dimension des Halteringes (17) und der Hälfte der Dimension des Halteringes, betrachtet in radialer Richtung, variiert, und eine Zone (16) im Durchmesser des zylindrischen Abschnittes des zweiten Elementes, und

— Mittel (18, 19) zur Gewährleistung der axialen Blockade des Ringstückes bezüglich des zweiten Elementes in einer Stellung, in der der Haltering gleichzeitig in der Kehle des zweiten Elementes und in dem Abschnitt des geringsten Querschnittes der Kelhle in dem Ringstück liegt.

2. Vorrichtung nach Anspruch 1, dadurch gekennzeichnet, daß der Haltering (17) aus einem Metalldraht hergestellt ist, der zunächst einem Wickelvorgang unterworfen wurde, um einen Ring zu bilden und der dann quer zertrennt worden ist, um mehrere Ringteilstücke zu bilden.

3. Vorrichtung nach einem der Ansprüche 1 und 2, dadurch gekennzeichnet, daß der Haltering (17) einen kreisförmigen Querschnitt hat.

4. Vorrichtung nach Anspruch 3, dadurch gekennzeichnet, daß die Kehle (15), die in dem Ringstück (12) vorgesehen ist, in ihren tiefen und weniger tiefen Abschnitten durch zwei Flächen begrenzt ist, die, gesehen im Schnitt, ein Kreisbogenprofil im Radius des Halteringes aufweisen, verbunden durch eine Schrägfläche als Tangente zu den beiden zylindrischen Flächen.

5. Vorrichtung nach einem der Ansprüche 1 bis 4, dadurch gekennzeichnet, daß die Mittel für die axiale Blockade des Ringstückes (12) auf dem zweiten Element (6) durch ein Element (18) gebildet sind, das auf definitive Weise zwischen dem Ende des Ringstückes und einer Schulter (19) an dem zweiten Element montiert ist.

## Claims

1. Srew connecting device between two parts with the possibility of adjusting the distance between them, this device comprising :

— a first part provided with a threaded rod (5) ;

— a second part (6) comprising a cylindrical joining section, having successively from its free end a chamfered zone (7), cylindrical zone (8), a groove (9) and then a cylindrical bearing piece (10), this part having a central bore of engaging with the threaded rod of the first part ;

— a retainer ring (17), made of a non-compressible material, the external profile of which corresponds to that of the base of the groove (9) in the second part and the cross-section of which is equal to double the section of the groove (9), and which is made of a plurality of sections (17a, 17b, 17c), designed to be disposed end to end under working conditions, to form a ring the diameter of which is equal to the diameter of the cylindrical opening of the ring, the largest dimension of each section being less than the said diameter ;

— a collar (12) comprising, successively on its internal surface, a threaded opening (13) with the diameter of the threaded rod (15) of the first part, a smooth zone (14) with the diameter of the cylindrical section of the second part, a groove (15) the depth of which varies axially between a value equal to the dimension of the retaining ring (17) and half the dimension of the retaining ring taken in the radial direction, and a zone (16) with the diameter of the cylindrical section of the second part ; and

— means (18, 19) for axially fixing the ring in relation to the second part in a position in which the retaining ring is simultaneously engaged in the groove of the second part and in the part of the small cross-section of the groove provided in the ring.

2. Device according to claim 1, characterised in that the retaining ring (17) is made of metal wire subjected, first of all, to a winding operation to form a ring which is then cut transversely to form a plurality of ring sections.

3. Device according to either of claims 1 and 2, characterised in that the retaining ring (17) has a circular cross-section.

4. Device according to claim 3, characterised in that the groove (15) provided in the ring (12) is delimited in its deep and shallow parts by two surfaces which, when viewed in cross-section, have a profile that is the shape of an arc of a circle with the radius of the retaining ring, connected by an inclined surface tangential to the two cylindrical surfaces.

5. Device according to any one of claims 1 to 4, characterised in that the means for axially fixing the ring (12) on the second part (6) are comprised of a part (18) mounted permanently between the end of the ring and a shoulder (19) provided on the second part.

FIG.1

FIG.2

FIG.3

FIG_4

FIG_5